(19) Europäisches Patentamt

European Patent Office

Office européen des brevets

(11) Veröffentlichungsnummer: **0 281 839 B1**

(12) **EUROPÄISCHE PATENTSCHRIFT**

(45) Veröffentlichungstag der Patentschrift: **24.06.92**

(21) Anmeldenummer: **88102673.6**

(22) Anmeldetag: **24.02.88**

(51) Int. Cl.⁵: **C03C 8/02**, C23D 5/02

(54) **Verfahren zur elektrophoretischen Weiss- und Farbemaillierung.**

(30) Priorität: **07.03.87 DE 3707401**

(43) Veröffentlichungstag der Anmeldung:
**14.09.88 Patentblatt 88/37**

(45) Bekanntmachung des Hinweises auf die
Patenterteilung:
**24.06.92 Patentblatt 92/26**

(84) Benannte Vertragsstaaten:
**DE ES FR GB IT NL**

(56) Entgegenhaltungen:
**EP-A- 0 049 041**
**EP-A- 0 089 418**
**EP-A- 0 106 252**
**US-A- 3 906 124**

(73) Patentinhaber: **BAYER AG**

**W-5090 Leverkusen 1 Bayerwerk(DE)**

(72) Erfinder: **Hees, Bruno**
**Zum Stadion 55**
**W-4018 Langenfeld(DE)**
Erfinder: **Hoffmann, Hans, Dr.**
**Landrat-Trimborn-Strasse 60**
**W-5653 Leichlingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die vorliegende Erfindung betrifft ein verbessertes Verfahren zur Emaillierung in Weiß oder Farben, insbesondere hellen Farben bei dem zunächst eine Grundemailschicht, dann eine Weiß- oder Farbemailschicht elektrophoretisch abgeschieden wird und anschließend beide Schichten gemeinsam eingebrannt werden. Dabei kann eine Stahlblechvorbehandlung durch Beizen und/oder Vernickeln entfallen.

Der Emailauftrag mittels Elektrotauchemaillierung (Elektrophorese, sog. ETE-Verfahren) ist bekannt. Produktionsanlagen unterschiedlicher Bauart - in erster Linie für Hausgeräteteile - sind in der Literatur beschrieben (vgl. Warnke, F. Kaup, Maschinenmarkt 80 (1974), S. 4 oder H. Hoffmann, Mitteilungen des VDEFa 24 (1981) S. 107), Warnke, Kaup, Mitteilungen des VDEFa 22 (1974), S. 49, Hoffmann, Mitteilungen des VDEFa 26 (1978), S. 91, van der Vliet, Mitteilungen des VDEFa 25 (1977), S. 49. Normalerweise ist die Elektrotauchemaillierung auf den Auftrag einer einzigen Schicht beschränkt, da sie einen leitenden, metallischen Untergrund voraussetzt.

Eine einmal gebrannte Emaillierung kann nicht mehr elektrophoretisch weiterbeschichtet werden. Durch Elektroosmose entsteht während des Auftrages eine Verfestigung der abgeschiedenen Schicht, die ein anschliessendes Abspülen lose anhaftender Teilchen ermöglicht. Unter bestimmten Voraussetzungen (genügend feste Abscheidung; Abstimmung der Produkte hinsichtlich Aufschmelzverhalten und Grenzflächenreaktionen) ist sogar der Auftrag einer weiteren Schicht auf diesem Untergrund möglich. Bei Produktkombinationen mit guter Elektrotauchabscheidung beider Systeme kann diese zweite Schicht dann auch wieder elektrophoretisch abgeschieden werden.

Bei Emaillierverfahren mit Grund- und nachfolgendem Deckemailauftrag und gemeinsamem Einbrand, die nicht elektrophoretich erfolgen, wie z.B. pulverelektrostatischem Auftrag (PUESTA) ist es bekannt, daß bei entsprechender Einbrenntemperatur leichtfließende, niedrigviskose Grundemailschichten erforderlich sind (W. Joseph; Mitteilungen VDEFa 1981 (S. 159).

Werden solche Grundemailtypen auch für den elektrophoretischen Auftrag eingesetzt, so wird das Verfahren sehr störanfällig, da dabei immer wieder Emaillierfehler z.B. Oberflächenstörungen durch elektrolytisch entstandene Bläschen) auftreten.

Überraschenderweise wurde nun gefunden, daß mit bestimmten, hochviskosen Grundemails nicht nur gute Haftung auf nur entfetteten, jedoch nicht gebeizten und/oder vernickelten Blechen, sondern auch fehlerfreie Emailoberflächen nach gemeinsamem Einbrand mit einer darüber aufgetragenen Deckemailschicht erhalten werden.

Gegenstand der vorliegenden Erfindung ist ein Verfahren zum elektrophoretischen Emailauftrag in Weiß oder Farben, insbesondere helle Farben, auf Stahlblech im Zweischicht/Ein-Brand-Verfahren, welches dadurch gekennzeichnet ist, daß als Grundemail eine Fritte mit folgender Zusammensetzung

| | |
|---|---|
| $SiO_2$ | 44-51 (Gew.-%) |
| $Al_2O_3$ | 1- 5 |
| $B_2O_3$ | 11-18 |
| $Na_2O$ | 6-12 |
| $Li_2O$ | 2- 6 |
| $BaO$ | 10-20 |
| $ZrO_4$ | 0-10 |
| $CoO,$ | 0,7-1,5 |
| $NiO$ | 1- 4 |

und mit folgenden Eigenschaften eingesetzt wird:

a) einem Ausdehnungskoeffizienten, der kleiner als $165 \cdot 10^{-7}/K$ bei 0 bis 100°C ist,

b) einer Oberflächenspannung von mehr als 300 mN/m,

c) einer Transformationstemperatur zwischen 480 und 520°C, vorzugsweise zwischen 490 und 510°C und

d) einem Fließwert von 15 bis 30.

Diese zur Charakterisierung des Grundemails herangezogenen Eigenschaften werden wie folgt bestimmt; Die Werte a) und b) sind berechnet nach Dietzel, Emaillierung, Springer-Verlag, 1981, S. 276; c) wird nach DIN 52 324 bestimmt und d) nach DIN 51 161, Berechnung nach einer Methode beschrieben in Kyri, Handbuch für Bayer-Email, 1974, Verlag des Vereins deutscher Emailfachleute e.V., Hagen, S. 161/162.

Besonders geeignet für das erfindungsgemäße Verfahren sind Emailfritten mit hohen Barium- und Lithiumgehalten Ferner sollten die entsprechenden Fritten fluorfrei sein.

Die erfindungsgemäß eingesetzten Zusammensetzungen führe auch zu einer besonders guten Eignung für einen elektrophoretischen Emailauftrag, bei dem guter "Umgriff", (Beschichtung der aus geometrischen Gründen ungünstigen Bereiche mit stark verringerter Feldliniendichte) schon bei geringen Abscheidungszeiten und somit geringen Schichtdicken der Grundemailschicht eingestellt werden kann.

Durch diese Tatsache ergibt sich die Möglichkeit, durch Zwischenschaltung der dünnen Vorbeschichtung mit den erfindungsgemäßen Grundemails auch jene Deckemails mit gutem Umgriff elektrophoretisch abscheiden zu können, bei denen die bekannte Arbeitsweise mit Natriumaluminat gemäß DE-PS 16 21 406 wegen zu hoher Ausgangsleitfähigkeit der Schlicker erschwert ist. (Zur $Al(OH)_3$-Abscheidung an strombegünstigten Stellen erforderliche Aluminatmengen würden die Leitfähigkeit so erhöhen, daß es zu ungünstigen elektrolytischen Nebenreaktionen kommen kann).

Die Schichtdicken des eingebrannten Grundemails können in weiten Grenzen zwischen ca. 30 $\mu$m und ca. 120 $\mu$m variieren. Die bisher bekannten Zweischicht/Ein-Brand-Verfahren enthalten die Maßgabe, diese Schicht nicht dicker als ca. 20 bis 40 $\mu$m aufzutragen, da sonst Oberflächenfehler in der Deckemailschicht auftreten. Im erfindungsgemäßen ETE-Verfahren wird zwar auch eine relativ dünne Schicht von ca. 40 $\mu$m bis 60 $\mu$m bevorzugt, dies jedoch nur, um die Schlagfestigkeit der Gesamtemaillierung in gleich guter Qualität wie die heute praktizierte, einschichtige Direkt-Weiß-Emaillierung sicherzustellen.

Nach dem ETE-Auftrag des Grundemails werden die durch den Tauchvorgang in den Grundemailschlicker anhaftenden, lockeren Emailteilchen durch Wasser abgespült. Bevorzugt werden hierfür zwei Spülstationen eingesetzt. In der ersten Station wird der weitaus größte Anteil dieser abzuspülenden Teilchen gesammelt und auf geeignete, an sich bekannte Weise dem Schlicker im Beschichtungsbecken wieder zugeführt. In der zweiten Station wird der Rest der Teilchen durch feindosiertes Absprühen mit Frischwasser entfernt. Dadurch ist gewährleistet, daß eine Verunreinigung des Deckemailschlickers durch Grundemailteilchen vermieden wird. Die eigentliche elektrophoretisch abgeschiedene Grundemailschicht ist verfahrensbedingt derart fest, daß ein Abrieb während des Eintauchens in den Deckemailschlicker unterbleibt.

Als Deckemail eignen sich alle ETE-tauglichen Emailtypen, wie sie aus der bekannten Praxis des ETE-Verfahrens geläufig sind (vgl. z.B. die eingangs genannten Literaturangaben).

Aus den bereits geschilderten Gründen der positiven Auswirkung der Grundschicht auf den "Umgriff" der Deckschicht fallen einige für den herkömmlichen ETE-Prozeß geltende Einschränkung hinsichtlich Emailauswahl weg.

Ausgeprägter Einsatzzweck des hier beschriebenen erfindungsgemäßen Verfahrens ist die Verwendung von Weißemails, vorzugsweise Titan-Bor-Typen, aber auch sog. Timails, d.h., zur Schmelze eingefärbte Weißemails, aus denen sich hellfarbige Emaillierungen ergeben. Die elektrophoretische Verarbeitung erfolgt nach eingeführten Parametern. Sinnvoll ist im vorliegenden Falle das Arbeiten bei erniedrigten elektrischen Leitfähigkeitswerten um ca. 2000 $\mu$S/cm. Niedrige Leitwerte sichern die Vermeidung von Reaktionen zu elektrolytisch entstehenden Gasbläschen.

Das erfindungsgemäße Verfahren hat auch den Vorteil, daß auf die elektrophoretisch abgeschiedene Grundemailschicht, nach einer Zwischenspülung ein Weiß- oder Farbemail in beliebiger, an sich bekannter Weise aufgetragen werden kann.

Die Erfindung soll anhand des folgenden Beispiels noch näher erläutert werden.

Beispiel

Teile aus handelsüblichem, kohlenstoffarmem, emaillierfähigem Stahlblech werden alkalisch entfettet mit Unterstützung durch Ultraschalleinwirkung, gespült, in saurer Lösung ohne Metallabtrag aktiviert, nochmals gespült und anschließend im ersten Beschichtungsbecken mit Grundemail elektrophoretisch beschichtet.

Das Grundemail hat einen Ausdehnungskoeffizienten von $160 \cdot 10^{-7}/K$, eine Oberflächenspannung von 305 mN/m, eine Transformationstemperatur von 505°C und einen Fließwert von 22.

Dieses Grundemail entspricht der oxidischen Zusammensetzung in Gew.-%:

| SiO$_2$ | 49,2 |
|---|---|
| Al$_2$O$_3$ | 1,1 |
| B$_2$O$_3$ | 15,6 |
| Na$_2$O | 7,3 |
| Li$_2$O | 3,2 |
| BaO | 15,5 |
| ZrO$_2$ | 4,4 |
| CoO | 0,9 |
| NiO | 2,8 |

Die aus der Schmelze entstehende Fritte wird mit üblichen Zusatzstoffen wie Ton, Bentonit, Caroboxymethylcellulose, Zeolith und Wasser in einer Kugelmühle zu einer Suspension vermahlen, mit weiterem Wasserzusatz auf ein geeignetes spezifisches Gewicht gebracht und mit Natriumaluminat versetzt, so daß bei der anodischen, elektrophoretischen Abscheidung mit ca. 10 V pro cm Abstand zur Kathode in ca. 5 - 10 sek. der für die zu emaillierenden Teile ausreichende "Umgriff" entsteht.

Danach wird in zwei Stationen gespült, wobei in der zweiten Station beim Herausnehmen der Teile aus dem Bad mit feindosiertem Frischwasser abgesprüht wird.

Die nachfolgende Weißemaillierung erfolgt mit einem Email der Zusammensetzung in Gew.-%:

| SiO$_2$ | 38,2 |
|---|---|
| Al$_2$O$_3$ | 0,3 |
| B$_2$O$_3$ | 21,8 |
| Na$_2$O | 7,4 |
| K$_2$O | 7,6 |
| Li$_2$O | 0,3 |
| TiO$_2$ | 20,4 |
| MgO | 0,4 |
| P$_2$O$_5$ | 3,3 |
| F | 2,0 |

Die Vermahlung zu einem Schlicker, die ETE-gerechte Einstellung des Schlickers und die Beschichtung erfolgen unter Anwendung bekannter Parameter. Nach Trocknung wird der gemeinsame Einbrand beider Schichten bei 820°C während 3 min. durchgeführt. Die Emailoberfläche zeigt eine hervorragende Glätte, frei von Fehlern wie Nadelstichen, schwarzen Punkten oder ähnlichem. Nach Prüfung mit einem Fallgerät erweist sich die Haftung als ausgezeichnet.

**Patentansprüche**

1. Verfahren zum elektrophoretischen Emailauftrag in Weiß oder Farben, insbesondere hellen Farben, auf Stahlblech im Zweischicht/Ein-Brand-Verfahren, dadurch gekennzeichnet, daß als Grundemail eine Fritte mit folgender Zusammensetzung

| SiO$_2$ | 44-51 (Gew.-%) |
|---|---|
| Al$_2$O$_3$ | 1-5 |
| B$_2$O$_3$ | 11-18 |
| Na$_2$O | 6-12 |
| Li$_2$O | 2- 6 |
| BaO | 10-20 |
| ZrO$_4$ | 0-10 |
| CoO | 0,7-1,5 |
| NiO | 1-4 |

und mit folgenden Eigenschaften
a) einem Ausdehnungskoeffizienten, der kleiner als $165 \cdot 10^{-7}$/K bei 0 bis 100°C ist,
b) einer Oberflächenspannung von mehr als 300 mN/m,

4

c) einer Transformationstemperatur zwischen 480 und 520°C, vorzugsweise zwischen 490 und 510°C und

d) einem Fließwert von 15 bis 30

eingesetzt wird.

2. Verfahren nach Anspruch 1, dadurch gekennzeichnet, daß das Grundemail in einer Schichtstärke von 40-60 μ aufgetragen wird.

3. Verfahren nach Anspruch 1 oder 2, dadurch gekennzeichnet, daß auf die elektrophoretisch abgeschiedene Grundemailschicht nach Zwischenspülung ein Weiß- oder Farbemail in beliebiger, an sich bekannter Weise aufgetragen wird.

**Claims**

1. A process for electrophoretic enamelling in white or colours, particularly light colours, on steel plate by the two-coat/single-fire method, characterized in that the base enamel used is a frit having the following composition:

| | |
|---|---|
| $SiO_2$ | 44-51 (% by weight) |
| $Al_2O_3$ | 1-5 |
| $B_2O_3$ | 11-18 |
| $Na_2O$ | 6-12 |
| $Li_2O$ | 2-6 |
| BaO | 10-20 |
| $ZrO_4$ | 0-10 |
| CoO | 0.7-1.5 |
| NiO | 1-4 |

and the following properties:

a) an expansion coefficient of less than $165 \cdot 10^{-7}/K$ at 0 to 100°C,

b) a surface tension of more than 300 mN/m,

c) a tranformation temperature of 480 to 520°C and preferably 490 to 510°C and

d) a yield value of 15 to 30.

2. A process as claimed in claim 1, characterized in that the base enamel is applied in a layer thickness of 40 to 60μ.

3. A process as claimed in claim 1 or 2, characterized in that, after intermediate rinsing, a white or coloured enamel is applied to the electrophoretically deposited base enamel coat by any method known **per se.**

**Revendications**

1. Procédé d'application électrophorétique d'un émail en blanc ou en couleurs, notamment en couleurs claires, sur une tôle d'acier par une opération de cuisson en deux couches, caractérisé en ce qu'on utilise comme masse une fritte de composition suivante

| SiO$_2$ | 44-51 (% en poids) |
|---|---|
| Al$_2$O$_3$ | 1-5 |
| B$_2$O$_3$ | 11-18 |
| Na$_2$O | 6-12 |
| Li$_2$O | 2- 6 |
| BaO | 10-20 |
| ZrO$_4$ | 0-10 |
| CoO | 0,7-1,5 |
| NiO | 1-4 |

et possédant les propriétés suivantes

    a) coefficient de dilatation inférieur à $165.10^{-7}$/K à 0-100°C,

    b) tension superficielle supérieure à 300 mN/m,

    c) température de transformation entre 480 et 520°C, de préférence entre 490 et 510°C et

    d) valeur de fluidité de 15 à 30.

**2.** Procédé suivant la revendication 1, caractérisé en ce que la masse est appliquée en une épaisseur de couche de 40 à 60 $\mu$m.

**3.** Procédé suivant la revendication 1 ou 2, caractérisé en ce qu'on applique sur la couche de masse déposée par voie électrophorétique, après un rinçage intermédiaire, un émail blanc ou en couleurs, d'une manière connue quelconque.